(19) Europäisches Patentamt
European Patent Office
Office européen des brevets

(11) **EP 1 849 243 B1**

(12) **EUROPÄISCHE PATENTSCHRIFT**

(45) Veröffentlichungstag und Bekanntmachung des Hinweises auf die Patenterteilung:
**27.03.2013 Patentblatt 2013/13**

(21) Anmeldenummer: 05801471.3

(22) Anmeldetag: **06.10.2005**

(51) Int Cl.:
***H04B 7/06*** *(2006.01)*

(86) Internationale Anmeldenummer:
**PCT/EP2005/055058**

(87) Internationale Veröffentlichungsnummer:
**WO 2006/084512 (17.08.2006 Gazette 2006/33)**

(54) **SENDER- UND EMPFÄNGERSEITIGE BEARBEITUNG VON MIT EINER SMART ANTENNA ABGESTRAHLTEN BZW. EMPFANGENEN SIGNALEN**

TRANSMITTER AND RECEIVER SIDE PROCESSING OF SIGNALS TRANSMITTED OR RECEIVED BY A SMART ANTENNA

TRAITEMENT DU COTE DE L'EMISSION ET DE LA RECEPTION DE SIGNAUX EMIS OU REÇUS A L'AIDE D'UNE ANTENNE INTELLIGENTE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **14.02.2005 EP 05003115**

(43) Veröffentlichungstag der Anmeldung:
**31.10.2007 Patentblatt 2007/44**

(73) Patentinhaber: **Nokia Siemens Networks GmbH & Co. KG**
**81541 München (DE)**

(72) Erfinder: **SPLETT, Armin**
**89079 Ulm (DE)**

(56) Entgegenhaltungen:
**EP-A- 1 229 669     US-A1- 2003 109 226**

**Beschreibung**

Die Erfindung betrifft ein Verfahren zum sender- und empfängerseitige Bearbeiten von Informationen, welche über eine Mehrzahl von Antennenelementen abgestrahlt bzw. empfangen werden. Weiterhin betrifft die Erfindung Vorrichtungen zur Durchführung der Verfahren.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Station übertragen. Bei den Stationen kann es sich hierbei je nach konkreter Ausgestaltung des Funkkommunikationssystems um verschiedenartige teilnehmerseitige Funkstationen oder netzseitige Funkeinrichtungen wie Repeater, Funkzugangspunkte oder Basisstationen handeln. In einem Mobilfunkkommunikationssystem handelt es sich bei zumindest einem Teil der teilnehmerseitigen Funkstationen um mobile Funkstationen. Das Abstrahlen der elektromagnetischen Wellen erfolgt mit Trägerfrequenzen, die in dem für das jeweilige System vorgesehenen Frequenzband liegen.

Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Außer diesen weiträumig organisierten (supralokalen) zellularen, hierarchischen Funknetzen gibt es auch drahtlose lokale Netze (WLANs, Wireless Local Area Networks) mit einem in der Regel räumlich deutlich stärker begrenzten Funkabdeckungsbereich. Beispiele verschiedener Standards für WLANs sind HiperLAN, DECT, IEEE 802.11, Bluetooth und WATM.

Der Zugriff von Funkstationen auf das gemeinsame Übertragungsmedium wird bei Funkkommunikationssystemen durch Vielfachzugriffsverfahren/Multiplexverfahren (Multiple Access, MA) geregelt. Bei diesen Vielfachzugriffen kann das Übertragungsmedium im Zeitbereich (Time Division Multiple Access, TDMA), im Frequenzbereich (Frequency Division Multiple Access, FDMA), im Codebereich (Code Division Multiple Access, CDMA) oder im Raumbereich (Space Division Multiple Access, SDMA) zwischen den Funkstationen aufgeteilt werden. Auch Kombinationen von Vielfachzugriffsverfahren sind möglich, wie z.B. die Kombination eines Frequenzbereichs-Vielfachzugriffsverfahrens mit einem Codebereichs-Vielfachzugriffsverfahren.

Zur effizienten Ausnutzung der knappen zur Verfügung stehenden Funkressourcen ist es vorteilhaft, wenn Funkstationen, insbesondere netzseitige Funkstationen, eine Mehrzahl von Antennenelementen zur Versendung und/oder zum Empfang von Nachrichten einsetzen. Hierdurch kann in Senderichtung der Antennenstrahl in Richtung des oder der Empfänger gelenkt werden, wodurch Interferenzen reduziert werden. In Empfangsrichtung können durch die Verwendung einer Mehrzahl von Antennenelementen gezielt Signale, welche aus einer bestimmten Richtung stammen, ausgewertet und andere Signale ausgeblendet werden.

Ein Beispiel ist in Dokument US 2003/0109226 gegeben.

Der Erfindung liegt die Aufgabe zugrunde, Verfahren zur sender- und/oder empfängerseitigen Bearbeitung von Informationen aufzuzeigen, bei welchen eine Mehrzahl von Antennenelementen eingesetzt werden. Weiterhin sollen Vorrichtungen zur Durchführung der Verfahren aufgezeigt werden.

Diese Aufgabe wird durch ein Verfahren mit den Merkmalen des Anspruchs 1, sowie durch ein Verfahren und Vorrichtungen mit Merkmalen von nebengeordneten Ansprüchen gelöst. Vorteilhafte Ausgestaltungen und Weiterbildungen sind Gegenstand von Unteransprüchen.

Gemäß dem Verfahren zum senderseitigen Bearbeiten von Informationen wird entschieden, in welche Abstrahlrichtung Signale für einen Empfänger abzustrahlen sind. Bei der Abstrahlrichtung handelt es sich um eine Linearkombination aus einer einer ersten Mehrzahl entsprechenden Anzahl an Antennenrichtdiagrammen. In einem Basisbandverarbeitungsteil wird aus einer für den Empfänger bestimmten Signalfolge eine der ersten Mehrzahl entsprechende Anzahl an Antennenrichtdiagramm-Signalfolgen bestimmt durch Wichtung der Signalfolge für jede der Antennenrichtdiagramme mit jeweils einem der Linearkombination entsprechenden Koeffizienten. Jede Antennenrichtdiagramm-Signalfolge wird über jeweils eine eigene logische Verbindung von dem Basisbandverarbeitungsteil zu einem Hochfrequenzverarbeitungsteil übertragen. In dem Hochfrequenzverarbeitungsteil erfolgt eine Umsetzung der ersten Mehrzahl an Antennenrichtdiagramm-Signalfolgen auf eine einer zweiten Mehrzahl entsprechende von der ersten Mehrzahl unterschiedliche Anzahl an Antennenelement-Analogsignalen. Jedes Antennenelement-Analogsignal wird von jeweils einem Antennenelement einer der zweiten Mehrzahl entsprechenden Anzahl an Antennenelementen abgestrahlt.

Die Erfindung findet Anwendung auf einen Sender eines Funkkommunikationssystems, welcher eine Mehrzahl von Antennenelementen aufweist, vorzugsweise auf eine Basisstation. Bei einem Antennenelement handelt es sich um eine Einrichtung zum Abstrahlen und gegebenenfalls auch zum Empfangen von Funkwellen. Jedes Antennenelement ist über genau einen Hochfrequenzanschluss an die weiteren Teile des Senders angeschlossen, über welchen das Antennenelement die abzustrahlenden Analogsignale empfängt und gegebenenfalls die empfangenen Analogsignale weiterleitet. Ein Antennenelement kann aus einer Anordnung von einem oder mehreren strahlenden Elementen, z.B. Dipolen, bestehen. Innerhalb eines Antennenelements werden all strahlenden Elemente mit dem gleichen Analogsignal versorgt, wobei Amplitude und Phase z.B. mit mechanischen Phasenschiebern geändert werden können, um die Abstrahlcharakteristik bzw. das Antennenrichtdiagramm des Antennenelements beeinflussen zu können. Die gesamte Abstrahlung der aus den mehreren Antennenelementen bestehenden Antenne ergibt sich aus der Überlagerung der Abstrahlcharakteristiken der einzelnen Antennenelemente. Die Abstrahlcharakteristik der Antenne wird erfindungsgemäß beeinflusst, um z.B. die Abstrahlung in eine bestimmte Richtung zu erzielen oder in eine bestimmte Richtung zur Verminderung von Interferenzen zu unterdrücken. Entsprechendes gilt in Empfangsrichtung, in welcher das Antennenrichtdiagramm der aus mehreren Antennenelementen bestehenden Antenne beeinflusst werden kann, um den Empfang von Analogsignalen aus einer bestimmten Richtung zu bevorzugen oder Interferenzsignale aus einer bestimmten Richtung zu unterdrücken.

Signale für einen Empfänger werden in eine bestimmte Abstrahlrichtung abgestrahlt. Die Entscheidung darüber, welche Abstrahlrichtung zu verwenden ist, kann insbesondere aus Kenntnissen über den Aufenthaltsort des Empfängers stammen, welche aus von dem Empfänger gesendeten Signalen gewonnen werden. Die Abstrahlung in die bestimmte Abstrahlrichtung wird realisiert, indem die Signale von einer zweiten Mehrzahl an Antennenelementen abgestrahlt werden. Zur senderseitigen Bearbeitung der an den Empfänger zu versendenden Informationen wird die bestimmte Abstrahlrichtung als Linearkombination aus einer ersten Mehrzahl an Antennenrichtdiagrammen dargestellt. Bei der Abstrahlrichtung handelt es sich somit um ein bestimmtes Antennenrichtdiagramm, welches für die Abstrahlung zu verwenden ist. Vorzugsweise erfolgt die Darstellung derart, dass alle oder zumindest zwei der Linearkombinations-Koeffizienten der einzelnen Antennenrichtdiagramme ungleich Null sind.

Es existiert ein Basisbandverarbeitungsteil, welches zumindest Teile der Basisbandverarbeitung, d.h. der digitalen Verarbeitung der Informationen, durchführt, und ein Hochfrequenzverarbeitungsteil, welches zumindest die Umsetzung der digitalen Informationen in die zur Abstrahlung verwendete Trägerfrequenz durchführt. In dem Basisbandverarbeitungsteil wird eine erste Mehrzahl an Signalfolgen erzeugt, somit existiert für jedes der Antennenrichtdiagramme der Linearkombination eine eigene Signalfolge. Es handelt sich hierbei insofern um Antennenrichtdiagramm-Signalfolgen, als für jedes Antennenrichtdiagramm genau eine Signalfolge vorliegt. Die Antennenrichtdiagramm-Signalfolgen werden getrennt voneinander, jeweils über eine eigene logische Verbindung, zu dem Hochfrequenzverarbeitungsteil übertragen. Es werden somit zwischen dem Basisbandverarbeitungsteil und dem Hochfrequenzverarbeitungsteil zumindest so viele logische Verbindungen benötigt, wie Antennenrichtdiagramme zur Darstellung der Abstrahlrichtung eingesetzt werden.

Mehrere logische Verbindungen zwischen dem Basisbandverarbeitungsteil und dem Hochfrequenzverarbeitungsteil können über eine gemeinsame physikalische Verbindung, z.B. über einen Lichtleiter, übertragen werden. Somit existiert zumindest eine physikalische Verbindung zwischen dem Basisbandverarbeitungsteil und dem Hochfrequenzverarbeitungsteil. Die physikalische Verbindung bzw. die physikalischen Verbindungen können hierbei z.B. eine elektrisches oder optisches Übertragungsverfahren ermöglich.

Im Hochfrequenzverarbeitungsteil erfolgt eine Umsetzung der ersten Mehrzahl an Antennenrichtdiagramm-Signalfolgen in eine zweite Mehrzahl an Antennenelement-Analogsignalen. Die erste und die zweite Mehrzahl unterscheiden sich hierbei voneinander. Die Umsetzung ist zweigeteilt: die Signalfolgen werden durch Umsetzung auf die Trägerfrequenz zu Analogsignalen, d.h. es findet die Umwandlung von digitalen zu analogen Signalen statt, und die Anzahl der Informationsströme wird von der ersten Mehrzahl auf die zweite Mehrzahl geändert. Die zweite Mehrzahl entspricht hierbei der Anzahl an zur Signalabstrahlung verwendeten Antennenelementen. Es sind nach der Umsetzung insofern Antennenelement-Analogsignale vorhanden, als für jedes Antennenelement genau ein Analogsignal zur Abstrahlung vorliegt, d.h. jedes Antennenelement-Analogsignal ist für genau ein Antennenelement bestimmt, wobei kein Antennenelement mehrere der Antennenelement-Analogsignale ausstrahlt.

In Weiterbildung der Erfindung erfolgt die Umsetzung der ersten Mehrzahl an Antennenrichtdiagramm-Signalfolgen auf die zweite Mehrzahl an Antennenelement-Analogsignalen, indem die erste Mehrzahl an Antennenrichtdiagramm-Signalfolgen in eine der zweiten Mehrzahl entsprechende Anzahl an Antennenelement-Signalfolgen umgewandelt wird. Im Anschluss wird durch Umsetzung auf eine Trägerfrequenz die zweite Mehrzahl der Antennenelement-Signalfolgen in die zweite Mehrzahl der Antennenelement-Analogsignalen umgewandelt. Gemäß dieser Weiterbildung erfolgt zuerst die Umwandlung im digitalen, d.h. die Anzahl der Signalfolgen wird von der ersten Mehrzahl in die zweite Mehrzahl umgewandelt. Nach dieser Umwandlung im digitalen liegen Antennenelement-Signalfolgen vor, da für jedes Antennenelement genau eine Signalfolge zur Abstrahlung bestimmt ist. Als zweiter Schritt erfolgt die Umsetzung vom Basisband auf die Trägerfrequenz, wobei die Anzahl der Informationsströme unverändert bleibt, d.h. die zweite Mehrzahl an Antennenelement-Signalfolgen wird in die zweite Mehrzahl an Antennenelement-Analogsignalen umgewandelt. Eine Antennenelement-Signalfolge, welche für ein bestimmtes Antennenelement bestimmt ist, wird durch den zweiten Umwandlungsschritt zu einem Antennenelement-Analogsignal, welches für das gleiche Antennenelement bestimmt ist.

Einer anderen Weiterbildung der Erfindung gemäß erfolgt die Umsetzung der ersten Mehrzahl an Antennenrichtdiagramm-Signalfolgen auf die zweite Mehrzahl an Antennenelement-Analogsignalen, indem die erste Mehrzahl an Antennenrichtdiagramm-Signalfolgen durch Umsetzung auf eine Trägerfrequenz in eine der ersten Mehrzahl entsprechende Anzahl an Antennenrichtdiagramm-Analogsignale umgewandelt wird. Im Anschluss wird die erste Mehrzahl an Antennenrichtdiagramm-Analogsignale in die zweite Mehrzahl an Antennenelement-Analogsignale umgewandelt. Gemäß dieser Weiterbildung erfolgt zuerst die Umsetzung vom Basisband auf die Trägerfrequenz, wobei die Anzahl der Informationsströme unverändert bleibt. Nach dieser Umsetzung liegt somit für jedes Antennenrichtdiagramm ein Analogsignal vor. Danach wird die Anzahl der Analogsignale von der ersten auf die zweite Mehrzahl geändert, so dass anstelle der ersten Mehrzahl der Antennenrichtdiagramm-Analogsignale die zweite Mehrzahl der Antennenelement-Analogsignale vorliegt. Jedes Analogsignal der Antennenelement-Analogsignale ist für genau ein Antennenelement zur Abstrahlung bestimmt.

Mit Vorzug wird das erfindungsgemäße Verfahren auf eine Mehrzahl an Empfängern angewandt. Hierzu werden die einzelnen Antennenrichtdiagramm-Signalfolgen der verschiedenen Empfänger vor der Übertragung von dem Basisbandverarbeitungsteil zu dem Hochfrequenzverarbeitungsteil addiert, d.h. alle Antennenrichtdiagramm-Signalfolgen des ersten Antennenrichtdiagramms werden addiert, alle Antennenrichtdiagramm-Signalfolgen des zweiten Antennenrichtdiagramms werden addiert, usw. Die weitere Bearbeitung erfolgt in Bezug auf diese addierten Antennenrichtdiagramm-Signalfolgen. Hierbei kann es sich insbesondere bei einem ersten Empfänger um einen einzelnen Empfänger und bei einem zweiten Empfänger um eine Gruppe von Empfängern handeln, d.h. bei der ersten Übertragung um einen Unicast und bei der zweiten Übertragung um einen Multicast oder Broadcast.

Bei dem erfindungsgemäßen Verfahren zur empfängerseitigen Bearbeitung von Informationen werden von einer einer zweiten Mehrzahl entsprechenden Anzahl an Antennenelementen jeweils ein Antennenelement-Analogsignal eines Senders empfangen. In einem Hochfrequenzverarbeitungsteil erfolgt eine Umsetzung der zweiten Mehrzahl an Antennenelement-Analogsignalen auf eine einer ersten Mehrzahl entsprechende von der zweiten Mehrzahl unterschiedliche Anzahl an Antennenrichtdiagramm-Signalfolgen, wobei es sich bei jeder Antennenrichtdiagramm-Signalfolge um eine über ein bestimmtes Antennenrichtdiagramm empfangene Signalfolge handelt. Jede Antennenrichtdiagramm-Signalfolge wird über jeweils eine eigene logische Verbindung von dem Hochfrequenzverarbeitungsteil zu einem Basisbandverarbeitungsteil übertragen. In dem Basisbandverarbeitungsteil wird eine Signalfolge aus den Antennenrichtdiagramm-Signalfolgen gebildet, z.B. als Linearkombination der Antennenrichtdiagramm-Signalfolgen, indem jede Antennenrichtdiagramm-Signalfolge mit einem Koeffizienten gewichtet wird.

Bei dem erfindungsgemäßen Verfahren zur empfängerseitigen Bearbeitung von Informationen handelt es sich um die Umkehrschritte zu dem erfindungsgemäßen Verfahren zur senderseitigen Bearbeitung von Informationen. Obige Ausführungen in Bezug auf die senderseitigen Schritte sind daher entsprechend auf das empfängerseitige Verfahren übertragbar. Insbesondere ist es vorteilhaft, wenn das senderseitige und das empfängerseitige Verfahren in Kombination angewandt werden. Hierbei kann die Wichtung gemäß einer bevorzugten Ausführungsform bei dem senderseitigen und dem empfängerseitigen Bearbeiten mit den gleichen Koeffizienten erfolgen.

Besonders vorteilhaft ist es, wenn die zweite Mehrzahl größer als die erste Mehrzahl ist. Dies bedeutet, dass die Anzahl der logischen Verbindungen zwischen dem Basisbandverarbeitungsteil und dem Höchfrequenzverarbeitungsteil kleiner sein kann als die Anzahl der zur Abstrahlung und/oder zum Empfang verwendeten Antennenelemente.

Mit Vorzug kann die Übertragung zwischen dem Basisbandverarbeitungsteil und dem Hochfrequenzverarbeitungsteil über eine CPRI-Schnittstelle (CPRI: Common Public Radio Interface) erfolgen.

Eine erste erfindungsgemäße Funkstation weist Mittel auf zum Entscheiden, in welche Abstrahlrichtung Signale für einen Empfänger abzustrahlen sind, wobei es sich bei der Abstrahlrichtung um eine Linearkombination aus einer einer ersten Mehrzahl entsprechenden Anzahl an Antennenrichtdiagrammen handelt. Weiterhin umfasst die Funkstation ein Basisbandverarbeitungsteil mit Mitteln zum Bestimmen einer der ersten Mehrzahl entsprechenden Anzahl an Antennenrichtdiagramm-Signalfolgen aus einer für den Empfänger bestimmten Signalfolge durch Wichtung der Signalfolge für jedes der Antennenrichtdiagramme mit jeweils einem der Linearkombination entsprechenden Koeffizienten. Es ist eine der ersten Mehrzahl entsprechende Anzahl logischer Verbindungen zwischen dem Basisbandverarbeitungsteil und einem Hochfrequenzverarbeitungsteil vorhanden, jeweils zum Übertragen einer der Antennenrichtdiagramm-Signalfolgen von dem Basisbandverarbeitungsteil zu dem Hochfrequenzverarbeitungsteil. Weiterhin weist die Funkstation Mittel in dem Hochfrequenzverarbeitungsteil auf zum Umsetzen der ersten Mehrzahl an Antennenrichtdiagramm-Signalfolgen auf eine einer zweiten Mehrzahl entsprechende von der ersten Mehrzahl unterschiedliche Anzahl an Antennenelement-Analogsignalen. Schließlich umfasst die Funkstation eine der zweiten Mehrzahl entsprechende Anzahl an Antennenelementen zum Abstrahlen von jeweils einem Antennenelement-Analogsignal.

Die zweite erfindungsgemäße Funkstation weist eine einer zweiten Mehrzahl entsprechende Anzahl an Antennenelementen auf zum Empfangen von jeweils einem Analogsignal eines Senders, sowie ein Hochfrequenzverarbeitungsteil mit Mitteln zum Umsetzen der zweiten Mehrzahl an Antennenelement-Analogsignalen auf eine einer ersten Mehrzahl entsprechende von der zweiten Mehrzahl unterschiedliche Anzahl von Antennenrichtdiagramm-Signalfolgen, wobei es sich bei jeder Antennenrichtdiagramm-Signalfolge um eine über ein bestimmtes Antennenrichtdiagramm empfangene Signalfolge handelt. Ferner umfasst die Funkstation eine der ersten Mehrzahl entsprechende Anzahl logischer Verbindungen zwischen einem Basisbandverarbeitungsteil und dem Hochfrequenzverarbeitungsteil, jeweils zum Übertragen einer der Antennenrichtdiagramm-Signalfolgen von dem Hochfrequenzverarbeitungsteil zu dem Basisbandverarbeitungsteil. Schließlich sind Mittel in dem Basisbandverarbeitungsteil vorhanden zum Bilden einer Signalfolge aus den Antennenrichtdiagramm-Signalfolgen, z.B. als Linearkombination der Antennenrichtdiagramm-Signalfolgen, indem jede Antennenrichtdiagramm-Signalfolge mit einem Koeffizienten gewichtet wird.

Die erste und die zweite erfindungsgemäße Funkstation eignen sich insbesondere zur Durchführung der erfindungsgemäßen Verfahren, wobei dies auch auf die Ausgestaltungen und Weiterbildungen zutreffen kann. Hierzu können sie weitere geeignete Mittel umfassen.

Im folgenden wird die Erfindung anhand eines Ausführungsbeispiels näher erläutert. Dabei zeigen:

Figur 1: schematisch einen ersten Aufbau einer erfindungsgemäßen Basisstation,

Figur 2: schematisch einen zweiten Aufbau einer erfindungsgemäßen Basisstation,

Figur 3: einen Ausschnitt aus einem Funkkommunikationssystem.

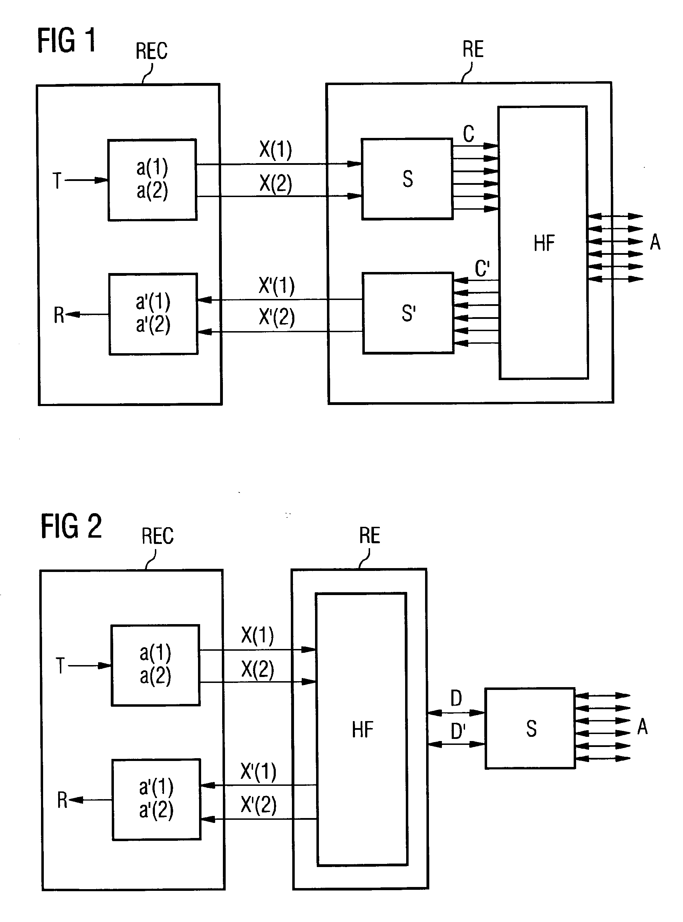

Figur 1 zeigt schematisch den Aufbau einer Basisstation eines Funkkommunikationssystems, z.B. nach dem Standard UMTS. Die Basisstation weist eine Mehrzahl von Antennenelementen A auf. Unter einem Antennenelement wird eine Einrichtung zum Abstrahlen und Empfangen von Funkstrahlen verstanden, welche genau einen Hochfrequenzanschluss zum Empfangen von per Funk abzustrahlenden Analogsignalen und zum Versenden von per Funk empfangenen Analogsignalen aufweist. Ein Antennenelement kann hierbei aus mehreren physikalischen Strahlern/Empfängern aufgebaut sein.

Durch den Einsatz von intelligenten Antennen, bestehend aus einer Mehrzahl von Antennenelementen, kann die Kapazität von Funkkommunikationssystemen erhöht werden. Im Zusammenhang mit CDMA oder OFDMA (Orthogonal Frequency Division Multiple Access) beispielsweise muss von einer Basisstation für jede Empfänger-Teilnehmerstation die Phase und die Amplitude des von jedem Antennenelement abzustrahlenden Analogsignals berechnet werden. Jedes Antennenelement ist über ein Hochfrequenzkabel an den Rest der Basisstation angeschlossen. Um die Länge der hierfür insgesamt benötigten Hochfrequenzkabel zu reduzieren, wird z.B. gemäß dem Standard CPRI (Common Public Radio Interface, beschrieben z.B. in CPRI Specification V1.3 (2004-10-01), Common Public Radio Interface (CPRI); Interface Specification) die Basisstation in die beiden Bestandteile REC (Radio Equipment Controller) und RE (Radio Equipment) aufgeteilt.

Die Basisstation der Figur 1 ist in die beiden Bestandteile REC und RE aufgeteilt. Der Bestandteil REC ist zuständig für die Basisbandverarbeitung von zu sendenden und empfangenen Informationen. Zwischen dem Bestandteil REC und dem Bestandteil RE werden digitale Signale gemäß dem CPRI-Standard z.B. über Lichtleiter übertragen. In dem Bestandteilen RE werden die digitalen Signale in der Baugruppe HF in analoge Signale derjenigen Trägerfrequenz, welche in dem Funkkommunikationssystem zur Kommunikation verwendet wird, umgewandelt. Es existieren sechs Antennenelemente A, über welche die analogen Signale abgestrahlt werden bzw. von welchen die von den Teilnehmerstationen gesendeten analogen Signale empfangen werden. Jedes der Antennenelemente A ist an die Baugruppe HF über ein Hochfrequenzkabel angeschlossen, durch sechs Doppelpfeile zwischen den Antennenelementen A und der Baugruppe HF symbolisiert.

In Senderichtung, dargestellt im oberen Teil der Figur 1, liegt für eine Teilnehmerstation eine Signalfolge T vor. Bei UMTS beispielsweise handelt es sich bei der Signalfolge T um das komplexe Basisbandsignal nach Spreizung und Scrambling. Es werden zwei diskrete Antennenrichtdiagramme festgelegt. Im folgenden wird zur Vereinfachung davon ausgegangen, dass es sich bei dem der Antennenrichtdiagramme um eine bestimmt Senderichtung handelt. Für jede der beiden Senderichtungen existiert eine logische Verbindung zwischen dem Bestandteil REC und dem Bestandteil RE. Für die erste Richtung wird die digitale Signalfolge X(1) von dem Bestandteil REC an den Bestandteil RE übertragen, für die zweite Richtung die digitale Signalfolge X(2). Die Signalfolgen X(1) und X(2) werden berechnet, indem die Signalfolge T mit einem Koeffizienten a(1) für die erste Senderichtung und a(2) für die zweite Senderichtung multipliziert wird: $X(j)=T \cdot a(j)$, wobei j der Index der diskreten Senderichtungen ist und die Werte 1 und 2 annehmen kann.

Bei den Koeffizienten a(1) und a(2) handelt es sich im allgemeinen um komplexe Zahlen. Vorzugsweise sind die Werte für a(1) und a(2) ungleich Null. Ist der Wert a(1) gleich Null und der Wert a(2) ungleich Null, so würde das Signal für die Teilnehmerstation in die zweite Senderichtung ausgestrahlt. Ist hingegen der Wert a(2) gleich Null und der Wert a(1) ungleich Null, so würde das Signal für die Teilnehmerstation in die erste Senderichtung ausgestrahlt. Sind die beiden Werte a(1) und a(2) ungleich Null, so erfolgt eine Signalausstrahlung in eine Richtung zwischen der ersten und der zweiten Senderichtung. Durch die Verwendung der beiden Koeffizienten a(1) und a(2) kann eine Linearkombination zweier diskreter Senderichtungen erfolgen. Hierdurch kann die Abstrahlung der Funksignale durch die Basisstation der Position der Teilnehmerstation angepasst werden. Die Ausstrahlung von teilnehmerspezifischen Signalen in die Richtung der aktuellen Position einer Teilnehmerstation erhöht die Kapazität, d.h. die Anzahl der Teilnehmer, welche bei gegebener Bandbreite pro Fläche kommunizieren können, da Interferenzen zwischen Signalen verschiedener Teilnehmer reduziert werden.

Die mit den Koeffizienten a(1) und a(2) gewichteten Signalfolgen werden in Form der Signalfolgen X(1) und X(2) von dem Bestandteil REC an den Bestandteil RE übertragen. Hierzu wird in Senderichtung, entsprechend dem oberen Teil der Figur 1, und in Empfangsrichtung, entsprechend dem unteren Teil der Figur 1, jeweils zumindest eine Leitung eingesetzt, die Übertragung erfolgt gemäß dem CPRI Standard. Für die Signalfolgen X(1) und X(2) wird jeweils eine eigene logische Verbindung zwischen dem Bestandteil REC und dem Bestandteil RE verwendet. Die beiden logischen Verbindungen können über eine gemeinsame physikalische Leitung verlaufen, es ist jedoch auch möglich, dass für jede logische Verbindung eine eigene Leitung existiert.

In dem Bestandteil RE werden aus den zwei Signalfolgen X(1) und X(2) sechs Signalfolgen C erzeugt, entsprechend den sechs Antennenelementen, welche zur Abstrahlung des Signals eingesetzt werden. Hierzu wird die Kopplungsmatrix S verwendet: $C(d) = S(d,j)·X(j)$, wobei j der Index der Senderichtungen ist und die Werte 1 und 2 annehmen kann, und d der Index der Antennenelemente ist und die Werte 1 bis 6 annehmen kann. Die Formel bezieht sich hierbei jeweils auf einen Zeitpunkt, d.h. der 2er-Vektor X besteht aus den zu einem Zeitpunkt von dem Bestandteil RE empfangenen Signal der Signalfolgen X(1) und X(2). Die 6x2 Matrix S bewirkt somit die Umsetzung des 2er-Vektors X mit den Einträgen X(1) und X(2) in den 6er-Vektor C mit den Einträgen C(1), C(2), C(3), C(4), C(5) und C(6).

Die Signalfolgen C(d) werden im Bauteil HF einer Kanalfilterung, bei UMTS beispielsweise durch ein Root-Raised-Cosine Filter, einer Umsetzung in die Hochfrequenzlage der Trägerfrequenz, sowie einer Leistungsverstärkung unterzogen. Die hieraus resultierenden analogen Signale werden über die sechs Antennenelemente abgestrahlt. Dies bedeutet, dass die Signalfolge C(1) in ein analoges Signal für das erste Antennenelement umgewandelt wird, die Signalfolge C(2) in ein analoges Signal für das zweite Antennenelement, usw. Es existiert somit eine eindeutige Zuordnung zwischen jeweils einer von der Matrix S ausgegebenen Signalfolge und einem Antennenelement.

Im Empfangrichtung finden die Umkehrschritte statt: im Bauteil HF werden die über die sechs Antennenelemente empfangenen analogen Signale in sechs Signalfolgen C' umgewandelt. Die Matrix S', bei welcher es sich um die transponierte Matrix S handelt, setzt die Signalfolgen C' in die beiden Signalfolgen X'(1) und X'(2) um, welche gemäß dem CPRI Standard von dem Bestandteil RE an den Bestandteil REC übertragen wird.

Durch Multiplikation des Vektors X' mit dem Vektor a', welcher aus den Einträgen a'(1) und a' (2) besteht, wird die Signalfolge R des empfangenen Signals gewonnen. Bei R handelt es sich somit um eine Linearkombination aus X'(1) und X'(2), wobei $R=a'(1)·X'(1)+a'(2)·X'(2)$. Die Werte a' (1) und a' (2) können durch Kanalschätzung zum Beispiel mit Hilfe von Trainingssequenzen gewonnen werden. Die Werte a(1) und a(2) für die Senderichtung können z.B. aus a(1)=a'(1) und a(2)=a'(2) gewonnen werden. Alternativ zur Bildung einer Linearkombination aus X'(1) und X'(2) kann di Signalfolge R auch durch eine andere Kombination der Signalfolgen X'(1) und X'(2) gebildet werden, so z.B. bei Anwendung eines Joint-Detection oder Maximum-Ratio-Combining Verfahrens.

Vorzugsweise werden zuerst die empfängerseitigen Verfahrensschritte unter Verwendung einer Trainingssequenz durchgeführt. Hierdurch können Koeffizienten a'(1) und a'(2) ermittelt werden, welche als Signalfolge R am besten die empfängerseitig bekannte Trainingssequenz ergeben. Die derart ermittelten Werte a' (1) und a'(2) geben somit die Position der Teilnehmerstation an, sie können im folgenden zur Bearbeitung von der Basisstation nicht bekannten empfangenen Signalen verwendet werden, sowie zur Bearbeitung von von der Basisstation zu versendenden Informationen.

In Figur 1 ist der Fall dargestellt, dass die Umsetzung der zwei Signalfolgen X(1) und X(2) mittels der Matrix S in die sechs Signalfolgen C(1), C(2), C(3), C(4), C(5) und C(6) im Basisband erfolgt. Alternativ kann auch eine Umsetzung im Hochfrequenzbereich von zwei Analogsignalen in sechs Analogsignale, wie in Figur 2 dargestellt, erfolgen. In Abweichung zu Figur 1 werden die beiden Signalfolgen X(1) und X(2) im Bestandteil RE im Bauteil HF in zwei analoge Signale D(1) und D(2) umgewandelt. Jedes der beiden analogen Signale bezieht sich auf eine der beiden Senderichtungen. Die beiden analogen Signale D(1) und D(2) werden von einer Butlermatrix S in sechs analoge Signale für die sechs Antennenelemente A umgewandelt. Die entsprechenden Ausführungen gelten auch für den Empfangspfad, welcher im unteren Teil der Figur 2 dargestellt ist.

Gemäß der Erfindung werden Signale in eine bestimmte Abstrahlrichtung abgestrahlt, während die Abstrahlung in bestimmte andere Richtungen unterdrückt wird. Es kann ein Schwenken des Antennenstrahls sowohl vertikal als auch horizontal erfolgen, entsprechend einem vertikalen Tilt und/oder einem horizontalen Tilt. Darüber hinaus kann die Hauptkeule der aus den verschiedenen Antennenelementen bestehenden Antenne prinzipiell in jede Raumrichtung geschwenkt werden. In Bezug auf die Freiheitsgrade bei der Erzeugung des Antennenrichtdiagramms der gesamten Antenne ist die Anzahl der Antennenelemente, ihre räumliche Anordnung, sowie die Antennenrichtdiagramme der Antennenelemente ausschlaggebend.

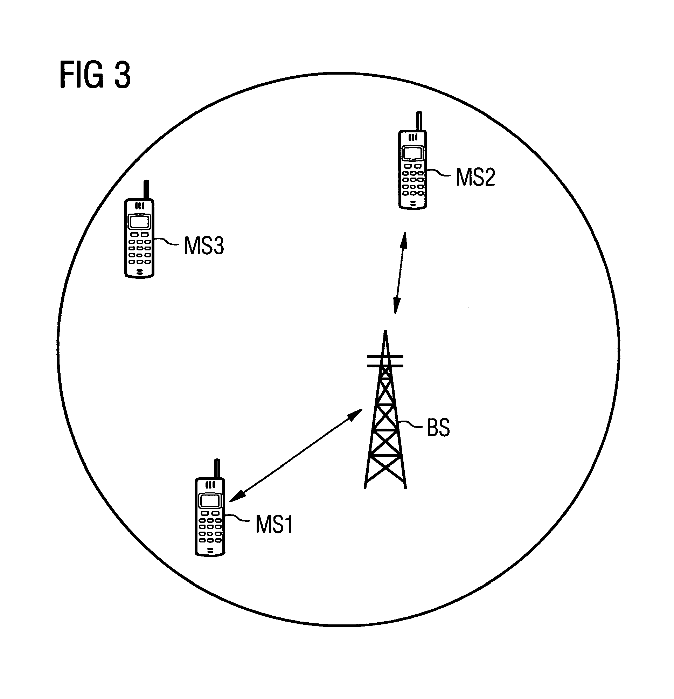

Figur 3 zeigt einen Bereich um die Basisstation BS, durch einen Kreis symbolisiert, in welchem sich die Teilnehmerstationen MS1, MS2 und MS3 befinden. Die beiden Senderichtungen entsprechend den Senderichtungen der Signalfolgen X(1) und X(2) der Figuren 1 und 2 sind durch Doppelpfeile dargestellt. Demgemäß befindet sich die Teilnehmerstation MS1 in der ersten Senderichtung, die Teilnehmerstation MS2 in der zweiten Senderichtung, und die Teilnehmerstation MS3 zwischen den beiden Senderichtung. Die Werte a(1) und a(2) werden daher bestimmt zu:

Teilnehmerstation MS1 : a(1)=1, a(2)=0,
Teilnehmerstation MS2: a(1)=0, a(2)=1,
Teilnehmerstation MS3: a(1)=0.5, a(2)=0.5.

Die Matrix S kann bei sechs Antennenelementen für die Konstellation der Figur 3 z.B. folgendermaßen konstruiert werden:

$$S = \begin{bmatrix} 1 & 1 \\ e^{-0.1 \cdot j} & e^{0.1 \cdot j} \\ e^{-0.2 \cdot j} & e^{0.2 \cdot j} \\ e^{0.2 \cdot j} & e^{-0.2 \cdot j} \\ e^{0.1 \cdot j} & e^{-0.1 \cdot j} \\ 1 & 1 \end{bmatrix}$$

Die Matrix S erzeugt für die erste Senderichtung (d.h. für a(1)=1 and a(2)=0) einen Antennenstrahl, welcher eine Hauptkeule nach links unten aufweist. So kann sich die Teilnehmerstation MS1 beispielsweise in einem Dorf in einem Tal aufhalten. Eine Abstrahlung in die erste Senderichtung wird bewirkt, indem die Phasen der einzelnen Antennenelemente gemäß der ersten Spalte der Matrix S gegeneinander verschoben werden.

Für die zweite Senderichtung (d.h. für a(1)=0 and a(2)=1) erzeugt die Matrix S hingegen einen Antennenstrahl, welcher eine Hauptkeule nach rechts oben aufweist, z.B. in Richtung eines Berggipfels. Eine Abstrahlung in die zweite Senderichtung wird bewirkt, indem die Phasen der einzelnen Antennenelemente gemäß der zweiten Spalte der Matrix S gegeneinander verschoben werden. Die Teilnehmerstation MS3, für deren Signalabstrahlung sowohl die erste als auch die zweite Spalte der Matrix S verantwortlich ist, kann sich z.B. auf einem Weg zwischen dem Dorf im Tal und dem Berggipfel befinden.

Werden lediglich die beiden durch Doppelpfeile dargestellten Senderichtung verwendet, so ist die Netzabdeckung auf das Gebiet zwischen dem Aufenthaltsort der Teilnehmerstation MS1 und der Teilnehmerstation MS2 optimiert, in welchem sich die die Teilnehmerstation MS3 aufhält. Der restliche Bereich der Funkzelle der Basisstation BS weist keine Funkabdeckung auf. Diese ist z.B. vorteilhaft, wenn es sich hierbei um unzugängliches Gebiet handelt, in welchem keine Teilnehmerstationen erwartet werden, oder ein Gebiet, in welchem keine Interferenz erzeugt werden soll. Bei einer ausreichend hohen Anzahl von Antennenelementen mit geeigneter räumlicher Anordnung, z.B. im Abstand der halben Wellenlänge der verwendeten Hochfrequenzsignale, können Gebiete verringerter Funkabdeckung und Gebiete verbesserter Funkabdeckung in sehr fein granularen Raumrichtungen definiert werden.

Gemäß der Erfindung wird somit eine Anzahl von diskreten Antennenrichtdiagrammen verwendet, welche kleiner als die Anzahl der Antennenelemente ist. Im beschriebenen Ausführungsbeispiel werden zwei Antennenrichtdiagramme bzw. Senderichtungen verwendet, während sechs Antennenelemente vorliegen. Die Erfindung ist jedoch auf beliebige andere Anzahlen von Antennenrichtdiagrammen und Antennenelementen anwendbar. Für jede Teilnehmerstation wird bestimmt, in welche Abstrahlrichtung Signale für die jeweilige Teilnehmerstation abzustrahlen sind, wobei als Abstrahlrichtungen ausschließlich Linearkombinationen der diskreten Antennenrichtdiagramme verwendet werden können. Für jede der Antennenrichtdiagramme wird eine Signalfolge, bei welcher es sich um eine für die Teilnehmerstation bestimmte Signalfolge gewichtet mit einem Faktor a handelt, erstellt und an den Bestandteil der Basisstation, welcher für die Verarbeitung der Signale im Hochfrequenzbereich verantwortlich ist, gesendet. Hierfür entspricht die Anzahl der logischen Verbindungen der Anzahl der Antennenrichtdiagramme. Im Hochfrequenzteil findet eine Umsetzung von der Anzahl der Antennenrichtdiagramme auf die größere Anzahl der Antennenelemente statt. Findet die Umsetzung im Basisband statt, wird hierzu eine Matrix verwendet, wobei jede Spalte der Matrix der Abstrahlung in genau einer der Antennenrichtdiagramme entspricht. Die Umsetzung kann alternativ im Hochfrequenzbereich bewirkt werden.

Die Einführung der diskreten Anzahl an Antennenrichtdiagrammen, deren Anzahl kleiner ist als die Anzahl der Antennenelemente, hat den Vorteil, dass die benötigte Länge der innerhalb der Basisstation zur Signalübertragung benötigten Leitungen verringert wird. Dies fällt umso mehr ins Gewicht, je größer die Entfernung zwischen der Einheit für die Basisbandverarbeitung, in den Figuren 1 und 2 dem Bestandteil REC, und der Einheit für die Hochfrequenzbearbeitung, in den Figuren 1 und 2 dem Bestandteil RE, ist.

In der Regel werden von der Basisstation Signale an mehrere Teilnehmerstationen versendet bzw. Signale mehrerer Teilnehmerstationen empfangen. In diesem Fall handelt es sich bei den Signalfolgen X(1) und X(2) um die Summen der Signalfolgen der unterschiedlichen Teilnehmerstationen. D.h. zuerst werden teilnehmerspezifische Signalfolgen X(1) und X(2) bestimmt, welche dann vor der Übertragung von dem Bestandteil REC an den Bestandteil RE summiert werden. Auch die Signalfolgen der gemeinsamen Kanäle, wie z.B.

des Broadcast-Kanals, werden zu den Teilnehmersignalfolgen addiert. Entsprechend handelt es sich in Empfangsrichtung bei den Signalfolgen X'(1) und X'(2) im allgemeinen um eine Überlagerung der von verschiedenen Teilnehmerstationen empfangenen Informationen.

Der Rechenaufwand in der Basisstation reduziert sich durch die Anwendung der Erfindung. Denn in dem Bestandteil REC müssen für einen Teilnehmer lediglich die Signale für die einzelnen Antennenrichtdiagramme bestimmt werden, und nicht für alle Antennenelemente. Die Umsetzung von der Anzahl der Antennenrichtdiagramme auf die Anzahl der Antennenelemente erfolgt, nachdem die Signale der verschiedenen Teilnehmerstationen summiert wurden. Dies bedeutet, dass Signale für die verschiedenen Antennenelemente nicht für jedes Teilnehmersignal, sondern für die Summe aus den Teilnehmersignalen bestimmt werden. Die hierdurch bewirkte Einsparung von Rechenkapazität ist umso größer, je größer der Unterschied zwischen der Anzahl der Antennenelemente und der Anzahl der Antennenrichtdiagramme ist.

Bei den Antennenrichtdiagrammen kann es sich wie in Figur 3 dargestellt um die Richtung der Hauptkeule der gesamten aus den mehreren Antennenelementen bestehenden Antennenvorrichtung handeln. Im allgemeinen kann eine Senderichtung verschiedensten Ausbildungen von Haupt- und Nebenkeulen entsprechen.

Während die Erfindung anhand des Standards zur Signalübertragung innerhalb einer Basisstation CPRI beschrieben wurde, ist die Erfindung unabhängig von dem CPRI-Standard anwendbar.

**Patentansprüche**

1. Verfahren zum senderseitigen Bearbeiten von Informationen, bei dem

    • entschieden wird, in welche Abstrahlrichtung Signale für einen Empfänger (MS1, MS2, MS3) abzustrahlen sind, wobei es sich bei der Abstrahlrichtung um eine Linearkombination aus einer einer ersten Mehrzahl entsprechenden Anzahl an Antennenrichtdiagrammen handelt,
    • in einem Basisbandverarbeitungsteil (REC) aus einer für den Empfänger (MS1, MS2, MS3) bestimmten Signalfolge (T) eine der ersten Mehrzahl entsprechende Anzahl an Antennenrichtdiagramm-Signalfolgen (X(1), X(2)) bestimmt wird durch Wichtung der Signalfolge (T) für jede der Antennenrichtdiagramme mit jeweils einem der Linearkombination entsprechenden Koeffizienten (a(1), a(2)),
    • jede Antennenrichtdiagramm-Signalfolge (X(1), X(2)) über jeweils eine eigene logische Verbindung von dem Basisbandverarbeitungsteil (REC) zu einem Hochfrequenzverarbeitungsteil (RE) übertragen wird,
    • in dem Hochfrequenzverarbeitungsteil (RE) eine Umsetzung der ersten Mehrzahl an Antennenrichtdiagramm-Signalfolgen (X(1), X(2)) auf eine einer zweiten Mehrzahl entsprechende von der ersten Mehrzahl unterschiedliche Anzahl an Antennenelement-Analogsignalen erfolgt,
    • jedes Antennenelement-Analogsignal von jeweils einem Antennenelement (A) einer der zweiten Mehrzahl entsprechenden Anzahl an Antennenelementen (A) abgestrahlt wird.

2. Verfahren nach Anspruch 1, bei dem die Umsetzung der ersten Mehrzahl an Antennenrichtdiagramm-Signalfolgen (X(1), X(2)) auf die zweite Mehrzahl an Antennenelement-Analogsignalen erfolgt, indem die erste Mehrzahl an Antennenrichtdiagramm-Signalfolgen (X(1), X(2)) in eine der zweiten Mehrzahl entsprechende Anzahl an Antennenelement-Signalfolgen (C) umgewandelt wird und im Anschluss durch Umsetzung auf eine Trägerfrequenz die zweite Mehrzahl an Antennenelement-Signalfolgen (C) in die zweite Mehrzahl an Antennenelement-Analogsignalen umgewandelt wird.

3. Verfahren nach Anspruch 1, bei dem die Umsetzung der ersten Mehrzahl an Antennenrichtdiagramm-Signalfolgen (X(1), X(2)) auf die zweite Mehrzahl an Antennenelement-Analogsignalen erfolgt, indem die erste Mehrzahl an Antennenrichtdiagramm-Signalfolgen (X(1), X(2)) durch Umsetzung auf eine Trägerfrequenz in eine der ersten Mehrzahl entsprechende Anzahl an Antennenrichtdiagramm-Analogsignalen (D) umgewandelt wird und im Anschluss die erste Mehrzahl an Antennenrichtdiagramm-Analogsignalen (D) in die zweite Mehrzahl an Antennenelement-Analogsignalen umgewandelt wird.

4. Verfahren nach einem der Ansprüche 1 bis 3, bei dem das Verfahren auf eine Mehrzahl an Empfängern (MS1, MS2, MS3) angewandt wird, indem

    • entschieden wird, in welche Abstrahlrichtung Signale für mehrere Empfänger (MS1, MS2, MS3) jeweils abzustrahlen sind, wobei es sich bei den Abstrahlrichtungen jeweils um eine Linearkombination aus einer einer ersten Mehrzahl entsprechenden Anzahl an Antennenrichtdiagrammen handelt,
    • in einem Basisbandverarbeitungsteil (REC) für jeden Empfänger (MS1, MS2, MS3) aus einer für den jeweiligen Empfänger (MS1, MS2, MS3) bestimmten Signalfolge (T) eine der ersten Mehrzahl entsprechende Anzahl an Antennenrichtdiagramm-Signalfolgen (X(1), X(2)) bestimmt wird durch Wichtung der Signalfolge (T) für jede der Antennenrichtdiagramme mit jeweils einem der Linearkombination entsprechenden Koeffizienten (a(1), a(2)),

• für jede der ersten Mehrzahl an Antennenrichtdiagrammen die Antennenrichtdiagramm-Signalfolgen (X(1), X(2)) der Empfänger (MS1, MS2, MS3) addiert werden,

• jede addierte Antennenrichtdiagramm-Signalfolge (X(1), X(2)) über jeweils eine eigene logische Verbindung von dem Basisbandverarbeitungsteil (REC) zu dem Hochfrequenzverarbeitungsteil (RE) übertragen wird,

• in dem Hochfrequenzverarbeitungsteil (RE) eine Umsetzung der ersten Mehrzahl an addierten Antennenrichtdiagramm-Signalfolgen (X(1), X(2)) auf eine einer zweiten Mehrzahl entsprechende von der ersten Mehrzahl unterschiedliche Anzahl an Antennenelement-Analogsignalen erfolgt,

• jedes Antennenelement-Analogsignal von jeweils einem Antennenelement (A) einer der zweiten Mehrzahl entsprechenden Anzahl an Antennenelementen (A) abgestrahlt wird.

5. Verfahren zum empfängerseitigen Bearbeiten von Informationen, bei dem

• von einer einer zweiten Mehrzahl entsprechenden Anzahl an Antennenelementen (A) jeweils ein Analogsignal eines Senders (MS1, MS2, MS3) empfangen wird,

• in einem Hochfrequenzverarbeitungsteil (RE) eine Umsetzung der zweiten Mehrzahl an Antennenelement-Analogsignalen auf eine einer ersten Mehrzahl entsprechende von der zweiten Mehrzahl unterschiedliche Anzahl an Antennenrichtdiagramm-Signalfolgen (X'(1), X'(2)) erfolgt, wobei es sich bei jeder Antennenrichtdiagramm-Signalfolge (X'(1), X'(2)) um eine über ein bestimmtes Antennenrichtdiagramm empfangene Signalfolge handelt,

• jede Antennenrichtdiagramm-Signalfolge (X'(1), X'(2)) über jeweils eine eigene logische Verbindung von dem Hochfrequenzverarbeitungsteil (RE) zu einem Basisbandverarbeitungsteil (REC) übertragen wird,

• in dem Basisbandverarbeitungsteil (REC) eine Signalfolge (R) aus den Antennenrichtdiagramm-Signalfolgen (X'(1), X'(2)) gebildet wird.

6. Verfahren nach Anspruch 5, bei dem
die Signalfolge (R) als Linearkombination der Antennenrichtdiagramm-Signalfolgen (X'(1), X'(2)) gebildet wird, indem jede Antennenrichtdiagramm-Signalfolge (X'(1), X'(2)) mit einem Koeffizienten (a'(1), a'(2)) gewichtet wird.

7. Verfahren nach Anspruch 5 oder 6, bei dem die Umsetzung der zweiten Mehrzahl an Antennenelement-Analogsignalen auf die erste Mehrzahl an Antennenrichtdiagramm-Signalfolgen (X'(1), X'(2)) erfolgt, indem die zweite Mehrzahl an Antennenelement-Analogsignalen durch Umsetzung in ein Basisband in eine der zweiten Mehrzahl entsprechende Anzahl an Antennenelement-Signalfolgen (C') umgewandelt wird und im Anschluss die zweite Mehrzahl an Antennenelement-Signalfolgen (C') in eine der ersten Mehrzahl entsprechende Anzahl an Antennenrichtdiagramm-Signalfolgen (X'(1), X'(2)) umgewandelt wird.

8. Verfahren nach Anspruch 5 oder 6, bei dem die Umsetzung der zweiten Mehrzahl an Antennenelement-Analogsignalen auf die erste Mehrzahl an Antennenrichtdiagramm-Signalfolgen (X'(1), X'(2)) erfolgt, indem die zweite Mehrzahl an Antennenelement-Analogsignalen in eine der ersten Mehrzahl entsprechende Anzahl an Antennenrichtdiagramm-Analogsignalen (D') umgewandelt wird und im Anschluss die erste Mehrzahl an Antennenrichtdiagramm-Analogsignalen (D') durch Umsetzung in ein Basisband in eine der ersten Mehrzahl entsprechende Anzahl an Antennenrichtdiagramm-Signalfolgen (X'(1), X'(2)) umgewandelt wird.

9. Verfahren nach einem der Ansprüche 1 bis 4 und einem der Ansprüche 6 bis 8, bei dem
die Wichtung bei dem senderseitigen Bearbeiten mit den gleichen Koeffizienten (a(1), a(2), a'(1), a'(2)) erfolgt wie bei dem empfängerseitigen Bearbeiten.

10. Verfahren nach einem der Ansprüche 1 bis 9, bei dem
die zweite Mehrzahl größer ist als die erste Mehrzahl.

11. Verfahren nach einem der Ansprüche 1 bis 10, bei dem
die Übertragung zwischen dem Basisbandverarbeitungsteil (REC) und dem Hochfrequenzverarbeitungsteil (RE) über eine CPRI-Schnittstelle erfolgt.

12. Funkstation (BS) mit

• Mitteln zum Entscheiden, in welche Abstrahlrichtung Signale für einen Empfänger (MS1, MS2, MS3) abzustrahlen sind, wobei es sich bei der Abstrahlrichtung um eine Linearkombination aus einer einer ersten Mehrzahl entsprechenden Anzahl an Antennenrichtdiagrammen handelt,

• einem Basisbandverarbeitungsteil (REC) mit Mitteln zum Bestimmen einer der ersten Mehrzahl entsprechenden Anzahl an Antennenrichtdiagramm-Signalfolgen (X(1), X(2)) aus einer für den Empfänger (MS1, MS2, MS3) bestimmten Signalfolge (T) durch Wichtung der Signalfolge (T) für jedes der Antennenrichtdiagramme mit jeweils einem der Linearkombination entsprechenden Koeffizienten (a(1), a(2)),
• einer der ersten Mehrzahl entsprechenden Anzahl logischer Verbindungen zwischen dem Basisbandverarbeitungsteil (REC) und einem Hochfrequenzverarbeitungsteil (RE) jeweils zum Übertragen einer der Antennenrichtdiagramm-Signalfolgen (X(1), X(2)) von dem Basisbandverarbeitungsteil (REC) zu dem Hochfrequenzverarbeitungsteil (RE),
• Mitteln (S, HF) in dem Hochfrequenzverarbeitungsteil (RE) zum Umsetzen der ersten Mehrzahl an Antennenrichtdiagramm-Signalfolgen (X(1), X(2)) auf eine einer zweiten Mehrzahl entsprechende von der ersten Mehrzahl unterschiedliche Anzahl an Antennenelement-Analogsignalen,
• einer der zweiten Mehrzahl entsprechenden Anzahl an Antennenelementen (A) zum Abstrahlen von jeweils einem Antennenelement-Analogsignal.

13. Funkstation (BS) mit

• einer einer zweiten Mehrzahl entsprechenden Anzahl an Antennenelementen (A) zum Empfangen von jeweils einem Analogsignal eines Senders (MS1, MS2, MS3),
• einem Hochfrequenzverarbeitungsteil (RE) mit Mitteln (S', HF) zum Umsetzen der zweiten Mehrzahl an Antennenelement-Analogsignalen auf eine einer ersten Mehrzahl entsprechende von der zweiten Mehrzahl unterschiedlichen Anzahl an Antennenrichtdiagramm-Signalfolgen (X'(1), X'(2)), wobei es sich bei jeder Antennenrichtdiagramm-Signalfolge (X'(1), X'(2)) um eine über ein bestimmtes Antennenrichtdiagramm empfangene Signalfolge handelt,
• einer der ersten Mehrzahl entsprechenden Anzahl logischer Verbindungen zwischen einem Basisbandverarbeitungsteil (REC) und dem Hochfrequenzverarbeitungsteil (RE) jeweils zum Übertragen einer der Antennenrichtdiagramm-Signalfolgen (X'(1), X'(2)) von dem Hochfrequenzverarbeitungsteil (RE) zu dem Basisbandverarbeitungsteil (REC),
• Mitteln in dem Basisbandverarbeitungsteil (REC) zum Bilden einer Signalfolge (R) aus den Antennenrichtdiagramm-Signalfolgen (X'(1), X'(2)).

**Claims**

1. Method for the transmitter-side processing of information, in which

• a decision is made regarding the transmission direction in which signals are to be transmitted for a receiver (MS1, MS2, MS3), wherein the transmission direction is a linear combination of a number of antenna directivity patterns corresponding to a first multiplicity,
• in a baseband processing part (REC), a number of antenna directivity pattern signal sequences (X(1), X(2)) corresponding to the first multiplicity is defined from a signal sequence (T) defined for the receiver by weighting the signal sequence (T) for each of the antenna directivity patterns in each case with a coefficient (a(1), a(2)) corresponding to the linear combination,
• each antenna directivity pattern signal sequence (X(1), X(2)) is transmitted in each case via a dedicated logical connection from the baseband processing part (REC) to a radio frequency processing part (RE),
• in the radio frequency processing part (RE), the first multiplicity of antenna directivity pattern signal sequences (X(1), X(2)) is converted into a number of antenna element analogue signals corresponding to a second multiplicity and differing from the first multiplicity,
• each antenna element analogue signal is transmitted in each case by an antenna element (A) of a number of antenna elements (A) corresponding to the second multiplicity.

2. Method according to Claim 1, in which the conversion of the first multiplicity of antenna directivity pattern signal sequences (X(1), X(2)) into the second multiplicity of antenna element analogue signals is carried out in that the first multiplicity of antenna directivity pattern signal sequences (X(1), X(2)) is converted into a number of antenna element signal sequences (C) corresponding to the second multiplicity and, subsequently, through conversion to a carrier frequency, the second multiplicity of antenna element signal sequences (C) is converted into the second multiplicity of antenna element analogue signals.

3. Method according to Claim 1, in which the conversion of the first multiplicity of antenna directivity pattern signal sequences (X(1), X(2)) into the second multiplicity of antenna element analogue signals is carried out in that the first multiplicity of antenna directivity pattern signal sequences (X(1), X(2)), through conversion to a carrier frequency, is converted into a number of antenna directivity pattern analogue signals (D) corresponding to the first multiplicity and, subsequently, the first multiplicity of antenna directivity pattern analogue signals (D) is converted into the second multiplicity of antenna element analogue signals.

**4.** Method according to one of Claims 1 to 3, in which the method is applied to a multiplicity of receivers (MS1, MS2, MS3), in that

 • a decision is made regarding the transmission direction in which signals are to be transmitted in each case for a plurality of receivers (MS1, MS2, MS3), wherein the transmission directions are in each case a linear combination of a number of antenna directivity patterns corresponding to a first multiplicity,
 • in a baseband processing part (REC), a number of antenna directivity pattern signal sequences (X(1), X(2)) corresponding to the first multiplicity is defined for each receiver (MS1, MS2, MS3) from a signal sequence (T) defined for the respective receiver (MS1, MS2, MS3) by weighting the signal sequence (T) for each of the antenna directivity patterns in each case with a coefficient (a(1), a(2)) corresponding to the linear combination,
 • for each of the first multiplicity of antenna directivity patterns, the antenna directivity pattern signal sequences (X(1), X(2)) of the receivers (MS1, MS2, MS3) are added together,
 • each added antenna directivity pattern signal sequence (X(1), X(2)) is transmitted in each case via a dedicated logical connection from the baseband processing part (REC) to the radio frequency processing part (RE),
 • in the radio frequency processing part (RE), a conversion of the first multiplicity of added antenna directivity pattern signal sequences (X(1), X(2)) into a number of antenna element analogue signals corresponding to a second multiplicity and differing from the first multiplicity is carried out,
 • each antenna element analogue signal is transmitted in each case by an antenna element (A) of a number of antenna elements (A) corresponding to the second multiplicity.

**5.** Method for the receiver-side processing of information, in which

 • an analogue signal of a transmitter (MS1, MS2, MS3) is received in each case by a number of antenna elements (A) corresponding to a second multiplicity,
 • in a radio frequency processing part (RE), a conversion of the second multiplicity of antenna element analogue signals into a number of antenna directivity pattern signal sequences (X'(1), X'(2)) corresponding to a first multiplicity and differing from the second multiplicity takes place, wherein each antenna directivity pattern signal sequence (X'(1), X'(2)) is a signal sequence received via a defined antenna directivity pattern,

 • each antenna directivity pattern signal sequence (X'(1), X'(2)) is transmitted in each case via a dedicated logical connection from the radio frequency processing part (RE) to a baseband processing part (REC),
 • in the baseband processing part (REC), a signal sequence (R) is formed from the antenna directivity pattern signal sequences (X'(1), X'(2)).

**6.** Method according to Claim 5, in which the signal sequence (R) is formed as a linear combination of the antenna directivity pattern signal sequences (X'(1), X'(2)) by weighting each antenna directivity pattern signal sequence (X'(1), X'(2)) with a coefficient (a'(1), a'(2)).

**7.** Method according to Claim 5 or 6, in which the conversion of the second multiplicity of antenna element analogue signals into the first multiplicity of antenna directivity pattern signal sequences (X'(1), X'(2)) is carried out in that the second multiplicity of antenna element analogue signals, through conversion into a baseband, is converted into a number of antenna element signal sequences (C') corresponding to the second multiplicity and, subsequently, the second multiplicity of antenna element signal sequences (C') is converted into a number of antenna directivity pattern signal sequences (X'(1), X'(2)) corresponding to the first multiplicity.

**8.** Method according to Claim 5 or 6, in which the conversion of the second multiplicity of antenna element analogue signals into the first multiplicity of antenna directivity pattern signal sequences (X'(1), X'(2)) is carried out in that the second multiplicity of antenna element analogue signals is converted into a number of antenna directivity pattern analogue signals (D') corresponding to the first multiplicity and, subsequently, the first multiplicity of antenna directivity pattern analogue signals (D'), through conversion into a baseband, is converted into a number of antenna directivity pattern signal sequences (X'(1), X'(2)) corresponding to the first multiplicity.

**9.** Method according to one of Claims 1 and 4 and one of Claims 6 to 8, in which the weighting in the transmitter-side processing is carried out with the same coefficients (a(1), a(2), a'(1), a'(2)) as in the receiver-side processing.

**10.** Method according to one of Claims 1 to 9, in which the second multiplicity is greater than the first multiplicity.

**11.** Method according to one of Claims 1 to 10, in which the transmission between the baseband processing part (REC) and the radio frequency processing part (RE) takes place via a CPRI interface.

12. Radio station (BS) with

• means for making a decision regarding the transmission direction in which signals are to be transmitted for a receiver (MS1, MS2, MS3), wherein the transmission direction is a linear combination of a number of antenna directivity patterns corresponding to a first multiplicity,
• a baseband processing part (REC) with means for defining a number of antenna directivity pattern signal sequences (X(1), X(2)) corresponding to the first multiplicity from a signal sequence (T) defined for the receiver (MS1, MS2, MS3) by weighting the signal sequence (T) for each of the antenna directivity patterns in each case with a coefficient (a(1), a(2)) corresponding to the linear combination,
• a number of logical connections corresponding to the first multiplicity between the baseband processing part (REC) and a radio frequency processing part (RE) in each case for transmitting one of the antenna directivity pattern signal sequences (X(1), X(2)) from the baseband processing part (REC) to the radio frequency processing part (RE),
• means (S, HF) in the radio frequency processing part (RE) for converting the first multiplicity of antenna directivity pattern signal sequences (X(1), X(2)) into a number of antenna element analogue signals corresponding to a second multiplicity and differing from the first multiplicity,
• a number of antenna elements (A) corresponding to the second multiplicity in each case for transmitting an antenna element analogue signal.

13. Radio station (BS) with

• a number of antenna elements (A) corresponding to a second multiplicity in each case for receiving an analogue signal of a transmitter (MS1, MS2, MS3),
• a radio frequency processing part (RE) with means (S', HF) for converting the second multiplicity of antenna element analogue signals into a number of antenna directivity pattern signal sequences (X'(1) X'(2)) corresponding to a first multiplicity and differing from the second multiplicity, wherein each antenna directivity pattern signal sequence (X'(1), X'(2)) is a signal sequence received via a defined antenna directivity pattern,
• a number of logical connections corresponding to the first multiplicity between a baseband processing part (REC) and the radio frequency processing part (RE) in each case for transmitting one of the antenna directivity pattern signal sequences (X'(1), X'(2)) from the radio frequency processing part (RE) to the baseband processing part (REC),
• means in the baseband processing part (REC) for forming a signal sequence (R) from the antenna directivity pattern signal sequences (X'(1), X'(2)).

## Revendications

1. Procédé de traitement d'informations du côté de l'émetteur, selon lequel :

   - il est décidé dans quelle direction de rayonnement doivent être émis des signaux pour un récepteur (MS1, MS2, MS3), la direction de rayonnement étant une combinaison linéaire d'un nombre de diagrammes directionnels d'antenne correspondant à un premier ensemble ;
   - est déterminé, dans une partie de traitement de bande de base (REC), à partir d'une suite de signaux (T) déterminée pour le récepteur (MS1, MS2, MS3), un nombre de suites de signaux de diagramme directionnel d'antenne (X(1), X(2)) correspondant au premier ensemble par pondération de la suite de signaux (T) pour chacun des diagrammes directionnels d'antenne avec respectivement un coefficient (a(1)), a(2)) correspondant à la combinaison linéaire ;
   - chaque suite de signaux de diagramme directionnel d'antenne (X(1), X(2)) est transmise via respectivement une propre liaison logique de la partie de traitement de bande de base (REC) vers une partie de traitement haute fréquence (RE) ;
   - dans la partie de traitement haute fréquence (RE) s'effectue une transposition du premier ensemble de suites de signaux de diagramme directionnel d'antenne (X(1), X(2)) sur un nombre de signaux analogiques d'élément d'antenne différent du premier ensemble et correspondant à un deuxième ensemble ;
   - chaque signal analogique d'élément d'antenne est émis par respectivement un élément d'antenne (A) d'un nombre d'éléments d'antenne (A) correspondant au deuxième ensemble.

2. Procédé selon la revendication 1, selon lequel la transposition du premier ensemble de suites de signaux de diagramme directionnel d'antenne (X(1), X(2)) sur le deuxième ensemble de signaux analogiques d'élément d'antenne s'effectue par conversion du premier ensemble de suites de signaux de diagramme directionnel d'antenne (X(1), X(2)) en un nombre de suites de signaux d'élément d'antenne (C) correspondant au deuxième ensemble, puis par conversion, par transposition sur une fréquence porteuse, du deuxième ensemble de suites de signaux d'élément d'antenne (C) en le deuxième ensemble de signaux analogiques d'élément d'antenne.

3. Procédé selon la revendication 1, selon lequel la transposition du premier ensemble de suites de signaux de diagramme directionnel d'antenne (X(1), X(2)) sur le deuxième ensemble de signaux analogiques d'élément d'antenne s'effectue par conversion, par transposition sur une fréquence porteuse, du premier ensemble de suites de signaux de diagramme directionnel d'antenne (X(1), X(2)) en un nombre de signaux analogiques de diagramme directionnel d'antenne (D) correspondant au premier ensemble, puis par conversion du premier ensemble de signaux analogiques de diagramme directionnel d'antenne (D) en le deuxième ensemble de signaux analogiques d'élément d'antenne.

4. Procédé selon l'une des revendications 1 à 3, selon lequel le procédé est appliqué à un ensemble de récepteurs (MS1, MS2, MS3) par le fait que :

   - il est décidé dans quelle direction de rayonnement doivent être respectivement émis des signaux pour plusieurs récepteurs (MS1, MS2, MS3), les directions de rayonnement étant respectivement une combinaison linéaire d'un nombre de diagrammes directionnels d'antenne correspondant à un premier ensemble ;
   - il est déterminé, dans une partie de traitement de bande de base (REC), pour chaque récepteur (MS1, MS2, MS3), à partir d'une suite de signaux (T) déterminée pour le récepteur respectif (MS1, MS2, MS3), un nombre de suites de signaux de diagramme directionnel d'antenne (X(1), X(2)) correspondant au premier ensemble par pondération de la suite de signaux (T) pour chacun des diagrammes directionnels d'antenne avec respectivement un coefficient (a(1)), a(2)) correspondant à la combinaison linéaire ;
   - pour chacun des premiers ensembles de diagrammes directionnels d'antenne, les suites de signaux (X(1), X(2)) de diagramme directionnel d'antenne des récepteurs (MS1, MS2, MS3) sont additionnées ;
   - chaque suite de signaux de diagramme directionnel d'antenne (X(1), X(2)) additionnée est transmise à la partie de traitement haute fréquence (RE) via respectivement une propre liaison logique de la partie de traitement de bande de base (REC) vers une partie de traitement haute fréquence (RE) ;
   - dans la partie de traitement haute fréquence (RE) s'effectue une transposition du premier ensemble de suites additionnées de signaux de diagramme directionnel d'antenne (X(1), X(2)) sur un nombre de signaux analogiques d'élément d'antenne différent du premier ensemble et correspondant à un deuxième ensemble ;
   - chaque signal analogique d'élément d'antenne est émis par respectivement un élément d'antenne (A) d'un nombre d'éléments d'antenne (A) correspondant au deuxième ensemble.

5. Procédé de traitement d'informations du côté du récepteur, selon lequel :

   - un signal analogique d'un émetteur (MS1, MS2, MS3) est respectivement reçu par un nombre d'éléments d'antenne (A) correspondant à un deuxième ensemble ;
   - dans une partie de traitement haute fréquence (RE) s'effectue une transposition du deuxième ensemble de signaux analogiques d'élément d'antenne sur un nombre de suites de signaux de diagramme directionnel d'antenne (X'(1), X'(2)) différent du deuxième ensemble et correspondant à un premier ensemble, chaque suite de signaux de diagramme directionnel d'antenne (X'(1), X'(2)) étant une suite de signaux reçue via un diagramme directionnel d'antenne déterminé ;
   - chaque suite de signaux de diagramme directionnel d'antenne (X'(1), X'(2)) est transmise, via respectivement une propre liaison logique, de la partie de traitement haute fréquence (RE) vers une partie de traitement de bande de base (REC) ;
   - une suite de signaux (R) est constituée à partir des suites de signaux de diagramme directionnel d'antenne (X'(1), X'(2)) dans la partie de traitement de bande de base (REC).

6. Procédé selon la revendication 5, selon lequel la suite de signaux (R) est constituée en tant que combinaison linéaire des suites de signaux de diagramme directionnel d'antenne (X'(1), X'(2)) par pondération de chaque suite de signaux de diagramme directionnel d'antenne (X'(1), X'(2)) avec un coefficient (a'(1), a'(2)).

7. Procédé selon la revendication 5 ou 6, selon lequel la transposition du deuxième ensemble de signaux analogiques d'élément d'antenne sur le premier ensemble de suites de signaux de diagramme directionnel d'antenne (X'(1), X'(2)) s'effectue par conversion du deuxième ensemble de signaux analogiques d'élément d'antenne, par transposition dans une bande de base, en un nombre de suites de signaux d'élément d'antenne (C') correspondant au deuxième ensemble, puis par conversion du deuxième ensemble de suites de signaux d'élément d'antenne (C') en un nombre de suites de signaux de diagramme directionnel d'antenne (X'(1), X'(2)) correspondant au premier ensemble.

**8.** Procédé selon la revendication 5 ou 6, selon lequel la transposition du deuxième ensemble de signaux analogiques d'élément d'antenne sur le premier ensemble de suites de signaux de diagramme directionnel d'antenne (X'(1), X'(2)) s'effectue par conversion du deuxième ensemble de signaux analogiques d'élément d'antenne en un nombre de signaux analogiques de diagramme directionnel d'antenne (D') correspondant au premier ensemble, puis par conversion, par transposition dans une bande de base, du premier ensemble de signaux analogiques de diagramme directionnel d'antenne (D') en un nombre de suites de signaux de diagramme directionnel d'antenne (X'(1), X'(2)) correspondant au premier ensemble.

**9.** Procédé selon l'une des revendications 1 à 4 et l'une des revendications 6 à 8, selon lequel la pondération lors du traitement du côté de l'émetteur s'effectue avec les mêmes coefficients (a(1), a(2), a'(1), a'(2)) que lors du traitement du côté du récepteur.

**10.** Procédé selon l'une des revendications 1 à 9, selon lequel le deuxième ensemble est plus grand que le premier ensemble.

**11.** Procédé selon l'une des revendications 1 à 10, selon lequel la transmission entre la partie de traitement de bande de base (REC) et la partie de traitement haute fréquence (RE) s'effectue via une interface CPRI.

**12.** Station radio (BS) comprenant :

- des moyens pour décider dans quelle direction de rayonnement doivent être émis des signaux pour un récepteur (MS1, MS2, MS3), la direction de rayonnement étant une combinaison linéaire d'un nombre de diagrammes directionnels d'antenne correspondant à un premier ensemble ;
- une partie de traitement de bande de base (REC) avec des moyens pour déterminer, à partir d'une suite de signaux (T) déterminée pour le récepteur (MS1, MS2, MS3), un nombre de suites de signaux de diagramme directionnel d'antenne (X(1), X(2)) correspondant au premier ensemble par pondération de la suite de signaux (T) pour chacun des diagrammes directionnels d'antenne avec respectivement un coefficient (a(1)), a(2)) correspondant à la combinaison linéaire ;
- un nombre, correspondant au premier ensemble, de liaisons logiques entre la partie de traitement de bande de base (REC) et une partie de traitement haute fréquence (RE), respectivement pour transmettre l'une des suites de signaux de diagramme directionnel d'antenne (X(1), X(2)) de la partie de traitement de bande de base (REC) à la partie de traitement haute fréquence (RE) ;
- des moyens (S, HF) dans la partie de traitement haute fréquence (RE) pour transposer le premier ensemble de suites de signaux de diagramme directionnel d'antenne (X(1), X(2)) sur un nombre de signaux analogiques d'élément d'antenne différent du premier ensemble et correspondant à un deuxième ensemble ;
- un nombre d'éléments d'antenne (A) correspondant au deuxième ensemble pour émettre respectivement un signal analogique d'élément d'antenne.

**13.** Station radio (BS) comportant :

- un nombre d'éléments d'antenne (A) correspondant à un deuxième ensemble pour recevoir respectivement un signal analogique d'un émetteur (MS1, MS2, MS3) ;
- une partie de traitement haute fréquence (RE) avec des moyens (S', HF) pour transposer le deuxième ensemble de signaux analogiques d'élément d'antenne sur un nombre de suites de signaux de diagramme directionnel d'antenne (X'(1), X'(2)) différent du deuxième ensemble et correspondant à un premier ensemble, chaque suite de signaux de diagramme directionnel d'antenne (X'(1), X'(2) étant une suite de signaux reçue via un diagramme directionnel d'antenne déterminé ;
- un nombre, correspondant au premier ensemble, de liaisons logiques entre une partie de traitement de bande de base (REC) et la partie de traitement haute fréquence (RE), respectivement pour transmettre l'une des suites de signaux de diagramme directionnel d'antenne (X'(1), X'(2)) de la partie de traitement haute fréquence (RE) à la partie de traitement de bande de base (REC) ;
- des moyens, dans la partie de traitement de bande de base (REC), pour constituer une suite de signaux (R) à partir des suites de signaux de diagramme directionnel d'antenne (X'(1), X'(2)).

## FIG 1

## FIG 2

FIG 3

**IN DER BESCHREIBUNG AUFGEFÜHRTE DOKUMENTE**

**In der Beschreibung aufgeführte Patentdokumente**

- US 20030109226 A

**In der Beschreibung aufgeführte Nicht-Patentliteratur**

- *CPRI Specification V1.3,* 01. Oktober 2004